# EUROPEAN PATENT APPLICATION

(11) **EP 1 429 226 A1**
(43) Date of publication of application: **16.06.2004**
(21) Application number: 02425770.1
(22) Date of filing: 13.12.2002
(51) Int. Cl.: G06F 1/00

(54) **Electronic system and corresponding method for protecting an access gate of a computer**

(71) Applicant: INFOTRONIC S.P.A., I-20121 Milan (IT)
(72) Inventor: Niccolini, Marcello, 20121 Milano (IT)
(74) Representative: Botti, Mario

(57) **Abstract**

The invention relates to a system and a method for protected access to an input/output gate (2) of an electronic processor equipped with conventional microprocessor units, volatile and mass memory units, at least one display unit, and an operating system (4) arranged to handle the several processor units, said access gate (2) being a USB gate allowing connenction at fast receptacle to predetermined peripheral units (3) of the electronic processor that are entitled to accede to be plugged in. The method comprises the following steps:
detecting, through the operating system (4), the type of any unit coupled to said USB gate (2);
comparing the detected type with a stored list of the predetermined units (3) entitled to accede;
disabling the USB gate (2) if the comparison gives negative result.

## Description

### Field of Application

The present invention relates to an electronic system and corresponding method for protecting an access gate of an electronic processor.

The invention broadly relates to an electronic tool able to improve the performance of electronic processor, e.g. personal computers (PCs), of a portable Notebook, or anyway of a Workstation, or a network terminal having at least one USB access gate or port.

For convenience of explanation only, the following description is made with reference to a PC, of the Desktop type, this not being limitative of the Applicant's rights.

### Prior Art

As most PC users well know, modern desktop computers are equipped with a plurality of input/output (I/O) access gates intended for linking the computer to a variety of peripheral units for helping and supporting the use of the applications.

For example, it is known the use of a serial interconnection gate for using the "mouse" associated to the computer , or the use of a parallel output gate for connecting a local printer, or the use of an ethernet auxiliary gate for connecting the computer to a local network interconnecting the computer and relating peripheral units. The video signal output also goes through a specific I/O gate.

PCs have reached such a worldwide diffusion that they have been standardisedfrom the point of view of the possibilities of interconnection with peripheral apparatus of various kinds, also produced in different countries.

In other words, all access gates are designed according to unified standards, allowing the user to use and carry his/her computer to any areas of the world without any particular problem as for the possibility of associating it with new peripheral units, or of replacing such units in case one ore more are damaged.

Among the several available access gates, one that has met with widespread acceptance is a USB gate, which may be regarded as a fast serial gate allowing different peripheral units to be connected through the "plugging" mode.

Among the various peripheral units that can be plugged into a USB gate, the most commonly used are scanners, masterisers, digital cameras, small webcams, and high-rate memory units known as Pen Disk.

A major advantage of a USB gate is that the peripheral unit can be plugged in/out without turning it off, which is by keeping the electric supply of the unit. On the other hand, this procedure is not recommended for all apparatus connected to other types of access gates of the computer.

While being advantageous from several point of view, a USB gate has a significant limitation in that its easy use makes it particularly vulnerable as access gate to private data and information stored in the computer.

In fact, obtaining faithful copies of private data is a comparatively easy matter once a suitably fast memory apparatus equipped with a mass memory is plugged into the USB gate.

The underlying technical problem of this invention is to provide an electronic protection system and method having appropriate structural and functional features to prevent unauthorized access to private data stored in a computer by means of apparatus connected to the computer through the USB gate.

### Summary of the Invention

The resolvent idea on which the invention stands is one of equipping a processor with an electronic tool operative to monitor a group of peripheral units that are entitled to accede, and a means of blocking the gate upon attempted access by any unauthorized peripheral units.

The invention is essentially an electronic tool arranged to function as a "firewall" toward peripheral units that are not entitled to accede through the USB gate.

On the basis of this idea, the technical problem is solved by means of a protection system as previously indicated, and as defined in Claim 1 foll..

The technical problem is further solved by a protection method as defined in Claim 8.

The features and advantages of the system and the method according to the invention should become apparent from the following description of embodiments thereof, given by way of example and not of limitation with reference to the accompanying drawings.

### Brief Description of the Drawings

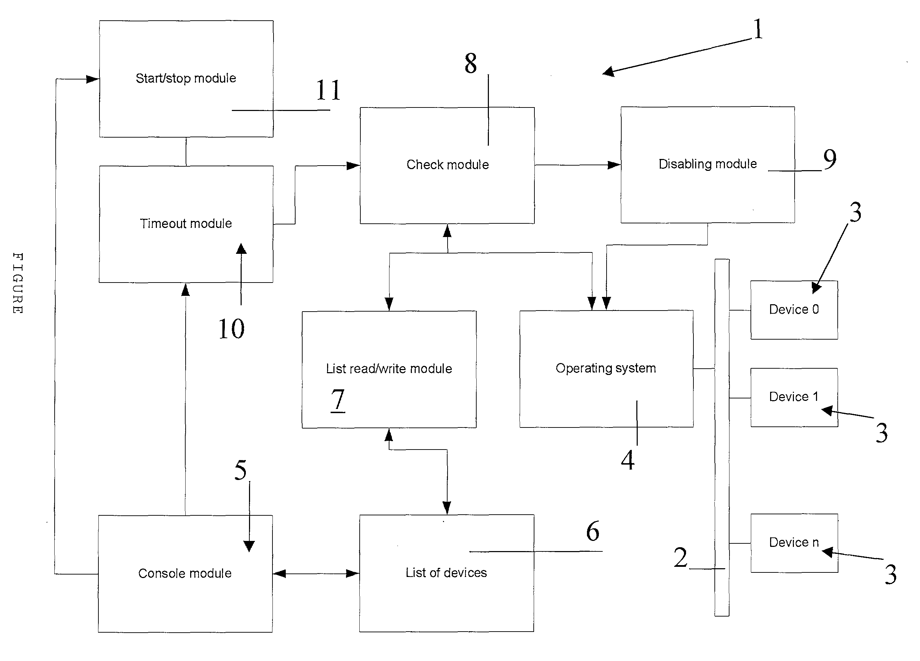

The single figure here enclosed of the drawings is a block diagram of the protection system according to this invention.

### Detailed Description

With reference to the drawing, 1 shows in a schematic and global way a protection system incorporated in an electronic personal processor, e.g. PC, Notebook, Workstation, network terminals, and the like.

The method of this invention may be implemented in either the hardware or the software form, without any limitation to the Applicant's rights. What matters is that the electronic processor, to which the method is applied, is provided with at least one USB serial access gate 2, whereinto one end of a linking connector can be plugged into a peripheral unit located outside the processor.

Electronic processor means here any personal computer (PC) comprising conventional microprocessor units, volatile and mass memory units, at least one display unit, and an operating system (4) used to manage the units in the processor.

The drawing schematically shows the USB gate having a single element 2 to which a plurality of peripheral units 3 located outside the electronic processor are led. For illustrative purposes only, such units are represented by blocks Device0, Device1,..., DeviceN.

Of course, there is no reason why the processor could not be provided with a wide number of USB access gates 2, each associated with a relating peripheral units 3.

Both in case of single or plural USB gates 2, each gate 2 is slave to the computer-resident Operating System designed to receive and transmit electric signals from/to the peripheral units 3 via the USB gate(s) 2.

The system 1 of the invention is compatible with electronic processors on which an MS Windows® 2000, or alternatively MS Windows® XP, Operating System is installed. There is no reason, however, why a different Operating System could not be used. In the drawing herewith enclosed, the Operating System is represented illustratively by a block 4 associated with the USB gate(s) 2.

Advantageously in this invention, the system 1 is a modular construction, wherein each module may be viewed either as a hardware circuit portion or as an algorithm subroutine, where the method of the invention is mainly software implemented.

The system 1 comprises a first manager module 5, also called the "console" module, which monitors and co-ordinates the activities of the other modules in the system 1.

The module 5 controls a graphic interface which can be seen by the user of the electronic processor and designed to receive instruction to accede data concerning a list of apparatus 3 that have been authorized by the user to accede through the USB gate 2.

The list handled by means of the graphic interface is stored into a memory module 6 and can be updated by the user at any time.

The Operating System 4 gives access to the memory module 6 by way of a read/write module 7 that may be viewed as decoding circuitry of a memory unit containing the information of said apparatus list.

Advantageously, a checking module 8 is also arranged to check off the list of apparatus 3 stored at predetermined time intervals.

For the purpose, a timing module 10 is arranged to send a clock signal to the checking module 8, once an enabling signal is sent from the manager module 5. Accordingly, the checking module will check off periodically the list of apparatus 3 that are authorized to accede through the USB gate.

A start/ stop module 11 is slave of the manager module 5 to start or stop the protection procedure.

The starting module 11 activates the timing module 10.

Should the Operating System 4 detect an attempted access to the USB gate 2 by an unauthorized peripheral unit, the system 1 would directly recognize the attempt and activate the Operating System 4 through a disabling module 9 that is slave of the checking module 8.

The Operating System will signal the user, by displaying an error message, whenever the disabling module 9 is in operation.

Briefly, the electronic system 1 is an electronic tool able to improve the performance of a PC type of electronic processor by providing security control means unavailable on conventional computers.

This tool can control access to the USB gate through peripheral electronic units located outside the computer.

Thus, the USB interface can advantageously be used, and meanwhile easy copies of private data can be prevented.

The system of this invention essentially functions as a "firewall" with respect to peripheral units 3 which could compromise the security of the electronic processor or of a whole business network, where the processor is interconnected to a local network.

The system of this invention is only checked and managed by users of the business network that hold managerial status, and by no other users.

Thus, the system 1 implements the protection method of this invention, consisting of the following steps:
1. Entering the protection service; either automatically when the Operating System is turned on or on specific request from the user.
2. Checking off the list of peripheral units 3 that are authorized to accede through the USB gate 2.
3. Updating the list of said units by insering or removing units by way of a graphic interface.
4. Continually monitoring the access to gate 2 with the Operating System blocking any detected attempt of unauthorized access.

The protection may be activated by entering the auto-execution mode or from a dedicated taskbar icon, the operation being reserved for managers only.

This is an essential aspect for the overall security of the processor that incorporates the system 1, because the manager module 5 has to be accessed only by managers and not by any other user even if authorized.

In case the application is started by non-managers, the application will close without issuing an error message.

It should be noted, moreover, that other access modes activated by individuals intentioned to inhibit the service by erasing or altering its files would be denied by the Operating System for non managers.

The start from a taskbar icon is handled by a special algorithm incorporated in the system 1, the algorithm allowing the view of a suitably coloured icon so as to emphasize the current (started/ stopped) state of the service, along with a specific menu.

Let us now analyse briefly how the system of the invention allows the protection method to be implemented. First, the start/stop module 10 starts or stops the service.

The protection service may be started by the Operating System but, in case it has to be stopped, the Operating System provides a check with respect to a code that only the manager module 5 can access, along with the stopping command.

Thus, the service cannot be stopped by means of any of the procedures or "wizards" provided by standard Operating Systems. Only the manager module 5 can be started by users of manager status.

In the event of the Operating System requiring standard stopping, the service would respond with an error message.

The timing module 10 "wakes up" the checking module 8 at predetermined time intervals that can be set by the manager through the manager module 5.

The checking module 8 invites the Operating System 4 to supply data about the units 3 currently connected to the USB gate 2, and compares the list stored in the memory 4 by means of the read/write module 7. If unauthorized units are found, the disabling module 9 is sent a request to correspondingly block such units.

The disabling module 9, in turn, passes the request to the Operating System, which will execute it.

The system and the method of this invention do solve the technical problem, and afford the important advantage of providing an electronic processor equipped with a USB gate with protection against unauthorized or pyratical attempts directed to violate the system.

## Claims

1. An electronic protection system (1) for protecting an access gate (2) of an electronic processor equipped with conventional microprocessor units, volatile and mass memory units, at least one display unit, and an operating system (4) arranged to handle the several processor units, said access gate (2) being a USB gate allowing the connection at fast receptacle to predetermined peripheral units (3) of the electronic processor that are entitled to accede, **characterised in that** it comprises electronic means for detecting, through said operating system, the type of any unit coupled to said gate (2), and for comparing it with said predetermined units (3) entitled to accede; and comprises means for disabling said gate (2) when the comparison has a negative result.

2. A system according to Claim 1, **characterised in that** it comprises a manager module (5) allowing, by way of a graphic interface on said display, a user to itemize and update the list of said predetermined units (3) entitled to accede and store said list into one of said memory units of the processor.

3. A system according to Claim 2, **characterised in that** it comprises a checking module (8) comparing the type of said unit coupled to said gate (2) with said list of units (3) entitled to accede, enabling a module disabling said gate (2) to detect an unauthorized unit.

4. A system according to Claim 3, **characterised in that** said checking module (8) is slave of a timing signal issuing from a timing module (10) activated by said manager module (5).

5. A system according to Claim 3, **characterised in that** said disabling module (9) acts on the operating system (4) of the processor to disable said gate (2).

6. A system according to Claim 2, **characterised in that** the checking module (8) gains access to said memory unit through the operating system (4) of the processor.

7. A system according to Claim 1, **characterised in that** it comprises a start/ stop module (11) slave of said manager module (5) to start the protection automatically or upon user's request.

8. A method for protecting access for an input/output gate (2) of an electronic processor equipped with conventional microprocessor units, volatile and mass memory units, at least one display unit, and an operating system (4) arranged to handle the several processor units, said access gate (2) being a USB gate allowing a connection at fast receptacle to predetermined peripheral units (3) of the electronic processor that are entitled to accede, **characterised in that** it comprises the following steps:
detecting, through said operating system (4), the type of any unit coupled to said USB gate (2);
comparing said detected type with a stored list of said predetermined units (3) entitled to accede;
disabling said gate (2) if the comparison gives negative result.

9. A method according to Claim 8, **characterised in that** the user is given access to a graphic interface on said display for the purpose of itemizing and updating the list of said predetermined units (3) entitled to accede.

10. A method according to Claim 8, **characterised in that** said comparing step is executed at time intervals set by a timing module.
